**Europäisches Patentamt**

**European Patent Office**

**Office européen des brevets**

(19)

(11) Veröffentlichungsnummer : **0 345 431 B1**

(12) # EUROPÄISCHE PATENTSCHRIFT

(45) Veröffentlichungstag der Patentschrift :
**02.09.92 Patentblatt 92/36**

(51) Int. Cl.$^5$ : **F02B 19/14, F02F 1/42**

(21) Anmeldenummer : **89106105.3**

(22) Anmeldetag : **07.04.89**

(54) **Flüssigkeitsgekühlter Vierventil-Zylinderkopf für eine mehrzylindrige Brennkraftmaschine.**

(30) Priorität : **09.06.88 DE 3819655**

(43) Veröffentlichungstag der Anmeldung :
**13.12.89 Patentblatt 89/50**

(45) Bekanntmachung des Hinweises auf die
Patenterteilung :
**02.09.92 Patentblatt 92/36**

(84) Benannte Vertragsstaaten :
**AT FR GB IT SE**

(56) Entgegenhaltungen :
**DE-B- 1 301 656**
**FR-A- 2 295 242**
**GB-A- 1 151 619**
**US-A- 3 420 215**

(73) Patentinhaber : **DAIMLER-BENZ**
**AKTIENGESELLSCHAFT**
**Mercedesstrasse 136**
**W-7000 Stuttgart 60 (DE)**

(72) Erfinder : **Wagner, Wolf-Dietrich, Dipl.-Ing.**
**Lebretstrasse 5**
**W-7000 Stuttgart 60 (DE)**
Erfinder : **Springer, Willi, Dipl.Ing. (FH)**
**Ludwigstrasse 1**
**W-7320 Göppingen (DE)**

Erfinder : **Meissner, Ludwig**
**Moltkestrasse 21/1**
**W-7313 Reichenbach (DE)**
Erfinder : **Bonfert, Helmut**
**Tiergartenstrasse 29B**
**W-7030 Böblingen (DE)**
Erfinder : **Böttcher, Michael, Dipl.-Ing.**
**Landhausstrasse 101**
**W-7000 Stuttgart 1 (DE)**
Erfinder : **Hardt, Thomas, Dipl.-Ing.**
**Vogelsangstrasse 7**
**W-7302 Ostfildern 2 (DE)**
Erfinder : **Klumpp, Rolf, Dr.-Ing.**
**Lindenstrasse 33/1**
**W-7053 Kernen (DE)**
Erfinder : **Krause, Klaus**
**Starenweg 5**
**W-7145 Markgröningen (DE)**
Erfinder : **Peters, Arndt, Dr.-Ing.**
**Leinäckerstrasse 42**
**W-7056 Weinstadt 3 (DE)**
Erfinder : **Plattner, Ernst, Dipl.-Ing.**
**Dürerstrasse 18**
**W-6800 Mannheim 1 (DE)**
Erfinder : **Strobel, Wolfgang, Dipl.-Ing.**
**Hahnstrasse 11**
**W-7064 Remshalden (DE)**
Erfinder : **Waller, Wolfgang**
**Scherrenstrasse 16**
**W-7000 Stuttgart 60 (DE)**
Erfinder : **Wiemann, Günter, Dipl.-Ing.**
**Im Törle 13**
**W-7155 Oppenweiler (DE)**

EP 0 345 431 B1

**Beschreibung**

Die Erfindung bezieht sich auf einen flüssigkeitsgekühlten Vierventil-Zylinderkopf für eine mehrzylindrige Brennkraftmaschine gemäß Oberbegriff des Patentanspruchs 1.

Ein Zylinderkopf der gattungsgemäßen Bauart ist aus der DE-PS 35 13 126 bekannt. Zur Aussteifung des Zylinderkopfgehäuses sind im Bereich der Zylinderkopf-Längsmittelebene Längsrippen vorgesehen, die zwischen den Brennraumabschnitten mit Quergurten verbunden sind. Dabei setzen sich die Quergurte zur Verstärkung der brennraumseitigen Bodenabschnitte durch Stützsäulen im Wasserraum bis zum Zylinderkopfboden fort. Außerdem sind die an den seitlichen Gehäusewänden angeformten Führungsgehäuse für die Tassenstößel sowohl mit den Quergurten als auch mit den Längsrippen verbunden, wodurch eine Versteifung der zwischen den Quergurten liegenden Zylinderkopfbereiche einschließlich der zentral angeordneten Zündkerze erzielt wird. Diese Zylinderkopf-Konstruktion ist besonders für die Herstellung von Zylinderköpfen mit dachförmigen Brennräumen und den damit verbundenen großen Ventilwinkeln geeignet.

Hiervon ausgehend liegt der Erfindung die Aufgabe zugrunde, den bekannten Zylinderkopf so auszubilden, daß er bei geringem Gewicht auf einfache Weise auch bei einem relativ flach gestalteten Brennraum eine optimale Steifigkeit gewährleistet.

Die Aufgabe ist erfindungsgemäß durch die im Kennzeichen des Patentanspruchs 1 angegebenen Merkmale gelöst.

Durch die Erfindung wird eine Zylinderkopf-Konstruktion mit einer flachen Brennraumbegrenzung im Zylinderkopfboden erreicht, die eine optimale Steifigkeit besitzt und daher in besonderem Maße zur Verwendung bei Dieselmotoren mit vier Ventilen pro Zylinder geeignet ist. Insbesondere durch die zwischen den seitlichen Außenwänden durchgehend verlaufenden Quergurte wird eine derart hohe Steifigkeit erzielt, daß auf die Quergurte miteinander verbindende Verstärkungsrippen verzichtet werden kann. Hierdurch ist der erfindungsgemäße Zylinderkopf nicht nur gießtechnisch einfacher herzustellen, sondern durch das Fehlen von speziellen Verstärkungsrippen wird auch Gewicht eingespart. Darüber hinaus ist eine Anbindung der rohrförmigen Kammer an den deckeltrennebenenseitigen Teil des Zylinderkopfes nicht mehr erforderlich. Durch die demzufolge relativ niedere Ausbildung der rohrförmigen Kammer wird zusätzlich Gewicht eingespart.

Durch die Merkmale des Anspruches 2 übernehmen die Führungsgehäuse die Aussteifung des Zylinderkopfgehäuses in Längsrichtung. Gleichzeitig wird hierdurch eine Anordnung der Ventile mit kleinem Ventilwinkel erreicht, der für die flache Gestaltung der Brennraumabschnitte des Zylinderkopfbodens maßgebend ist.

Infolge des Verbundes von Kammer- und Ventilkanälen ist eine Umspülung des heißen Kammerabschnittes im Kühlwasserraum nicht möglich. Um dennoch eine gute Kühlung dieses Kammerabschnitts zu erreichen, wird das Kühlwasser gemäß den Merkmalen der Ansprüche 3 bis 5 gezielt durch Strömungsleitkanäle innerhalb des Kühlwasserrraumes um die Ventilkanäle geführt.

Dabei wird durch die Merkmale der Ansprüche 6 und 7 die Kühlung noch dadurch verstärkt, indem zusätzlich Kühlwasser mit einer relativ niederen Temperatur direkt in die Gehäuseeinschnitte zwischen den Ventilkanälen eingespritzt wird. Über die Gehäuseeinschnitte erreicht das Kühlwasser unmittelbar Teile der Kammerwandung, womit ein ähnlicher Kühleffekt wie mit einer Umspülung der Kammer erzielt wird.

Schließlich wird durch die Maßnahmen gemäß den Ansprüchen 8 und 9 eine günstige Verteilung der von den Spannschrauben über die hohlen Streben in den Zylinderkopfboden eingeleiteten Spannkräfte und der auf den brennraumseitigen Bodenschnitt einwirkenden Gaskräfte.

In der Zeichnung ist ein Ausführungsbeispiel eines Zylinderkopfes nach der Erfindung dargestellt. Es zeigen:

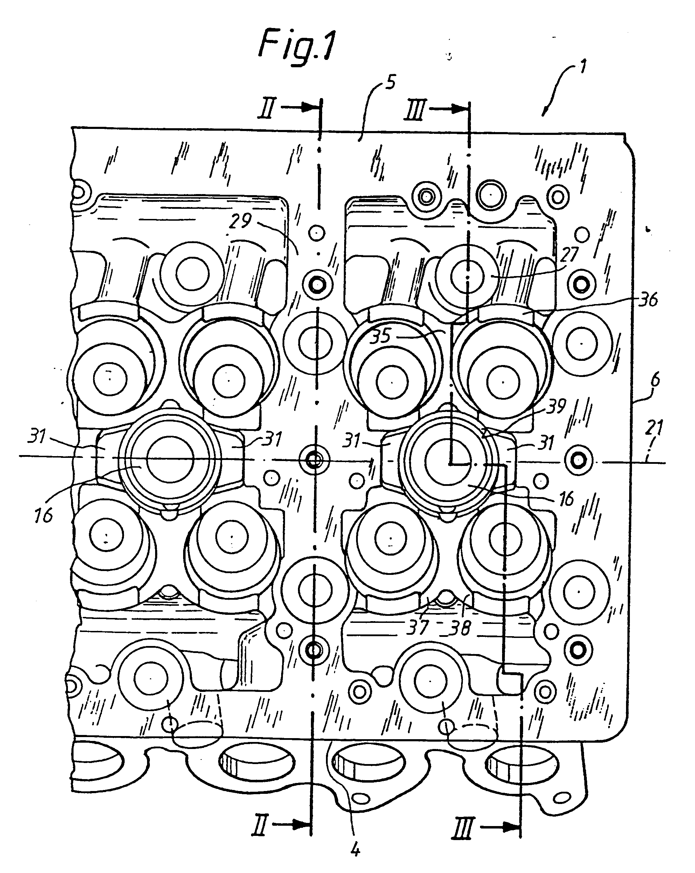

Figur 1 den zu einem Zylinder gehörenden Teil des Zylinderkopfes in der Draufsicht,

Figur 2 den Zylinderkopf aus Figur 1 im Querschnitt nach der Linie II-II,

Figur 3 den Zylinderkopf aus Figur 1 im Querschnitt gemäß der Linie III-III,

Figur 4 einen Schnitt durch den Kühlmittelraum des Zylinderkopfes gemäß der Linie IV-IV aus Figur 2,

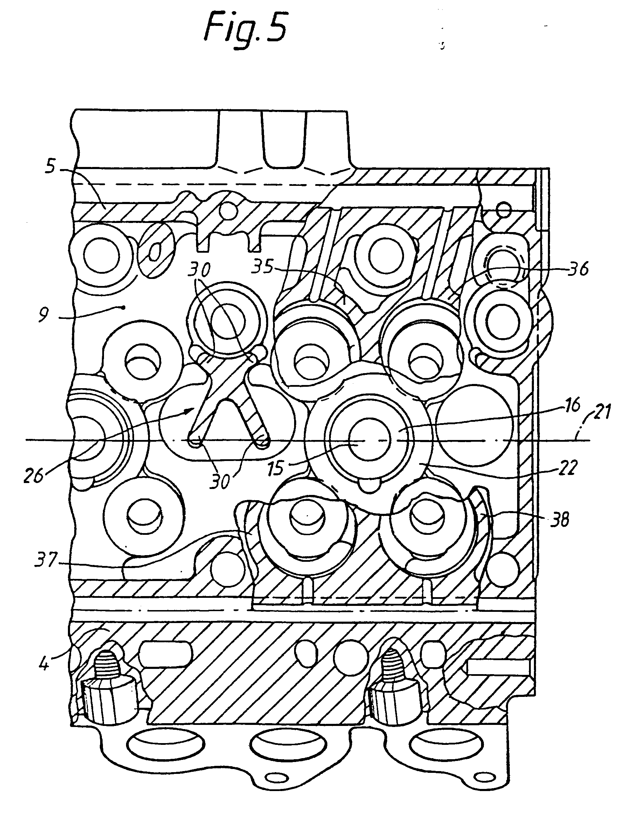

Figur 5 einen Schnitt durch den Steuerraum des Zylinderkopfes aus Figur 2 nach der Linie V-V und

Figur 6 einen Schnitt durch die Stützsäule im Bereich des Kühlmittelraumes nach der Linie VI-VI aus Figur 3.

Ein Zylinderkopf 1 für eine Mehrzylinder-Viertakt-Brennkraftmaschine besteht aus einem einteiligen Gußstück mit einem Zylinderkopfboden 2 und den von diesem nach oben bis zu einer Deckeltrennebene 3 abführenden längsseitigen- 4,5 und stirnseitigen Außenwänden 6.

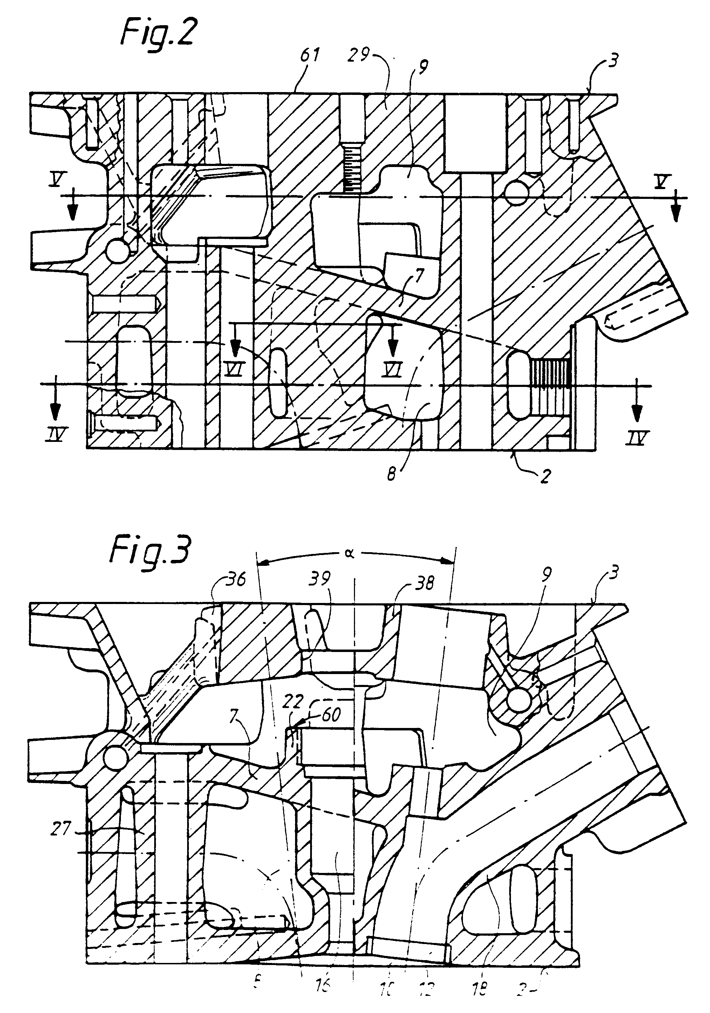

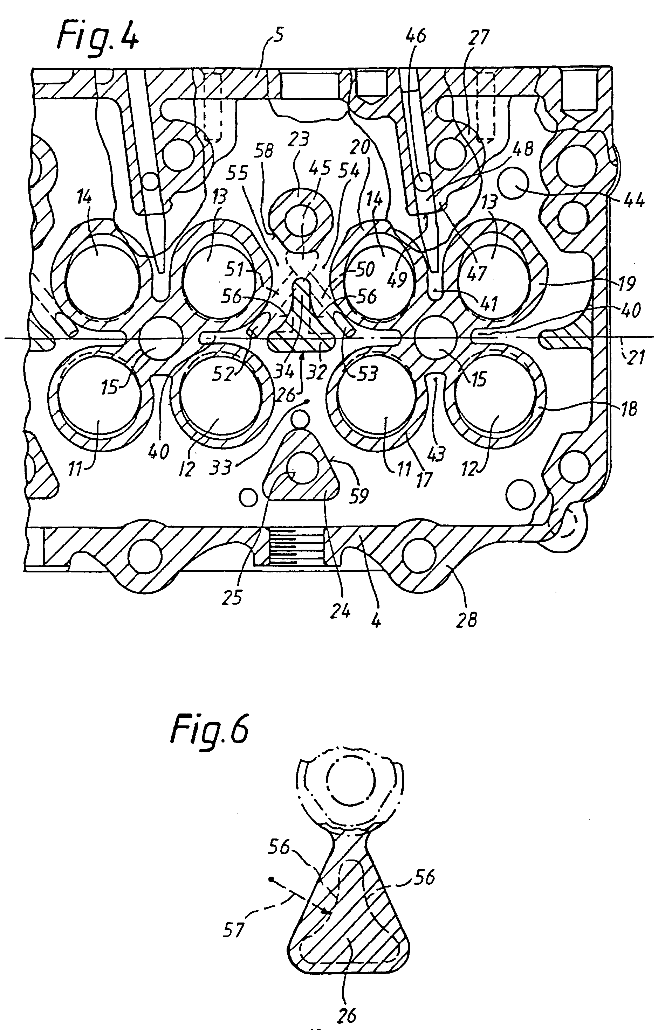

Im Zylinderkopfgehäuse ist mit Abstand vom Boden 2 eine Zylinderkopfdecke 7 eingegossen, durch die ein Kühlwasserraum 8 von einem darüberliegenden Steuerraum 9 abgetrennt ist. Die Zylinderkopfdecke ist in Zylinderkopfquerrichtung schräg angeordnet. Ihren größten Abstand vom Boden 2 hat sie dabei im Bereich der Außenwand 5 und ihren kleinsten Abstand im Bereich der Außenwand 4. Der Zylinderkopfboden 2 besitzt für jeden Zylinder einen als flache Ausnehmung gestalteten Brennraumabschnitt 10, welcher vier Mündungsöffnungen 11 bis 14 der mit zwei Einlaß- und zwei Auslaßventilen pro Zylinder arbeitenden Brennkraftmaschine und eine zentral zwischen diesen liegende Öffnung 15 einer Kammer 16 zur Aufnahme der Einspritzdüse oder eines Brennkammereinsatzes umfaßt. Von den Mündungsöffnungen 11 bis 14 führen Ventilkanäle 17 bis 20 ab, welche den Kühlwasserraum 6 in Zylinderkopfquerrichtung bis zu den seitlichen Außenwänden 4 und 5 durchsetzen. Die dabei von den Mündungsöffnungen 11 und 12 zur Außenwand 4 abführenden Ventilkanäle 17 und 18 bilden die Einlaßkanäle und die von den Mündungsöffnungen 13 und 14 abführenden Kanäle 19 und 20 die Auslaßkanäle. Die Ventilkanäle 17 und 18 grenzen die schräg verlaufende Zylinderkopfdecke 7 und ragen teilweise in den Steuerraum 9 vor. Durch diese Verbindung von Ventilkanälen und Zylinderkopfdecke 7 wird eine Versteifung des Zylinderkopf infolge einer Stützsäulenwirkung der Ventilkanäle erreicht. Die Kammer 16 durchsetzt den Kühlwasserraum 8 konzentrisch zur Zylinderkopflängsmittelebene 21 bis hin zur Zylinderkopfdecke 7 und endet in einem in den Steuerraum 9 vorstehenden Gewindebund 22 zum Festsetzen eines in die Kammer 16 eingeschobenen Brennkammereinsatzes. Das obere Ende 60 der Kammer 16 liegt also tiefer als die der Zylinderkopfdecke 7 zugewandte Oberfläche 61 der Quergurte 29 (s. Figuren 2 und 3). Aus Figur 4 ist zu erkennen, daß die Kammer 16 mit den Ventilkanälen 17 bis 20 innerhalb des Kühlwasserraumes 8 zusammengegossen ist. Durch diesen Verbund von Ventilkanälen und Kammer ergibt sich die notwendige Steifigkeit der Brennraumabschnitte 10 innerhalb des gesamten Zylinderkopfbodens 2 und eine gleichmäßige Verteilung der Gaskräfte im Zylinderkopfgehäuse. Zur weiteren Versteifung des Gehäuses sind in zwischen den Brennraumabschnitten 10 verlaufenden Zylinderkopfquerebenen je zwei Stützsäulen 23 und 24 mit Bohrungen 25 zur Durchführung von Zylinderkopfschrauben und im Bereich der Längsmittelebene 21 eine Stützstrebe 26 vorgesehen. Außerdem sind zwei weitere Stützsäulen 27 und 28 in einer die Brennraumabschnitte 10 etwa mittig schneidenden Zylinderkopfquerebene angeordnet, die sich mit einem relativ großen Querabstand innen entlang der Außenwände 4 und 5 erstrecken und die zusammen mit den anderen Stützsäulen 23 und 24 eine hexagonale Befestigungsanordnung für jeden Brennraumabschnitt 10 des Zylinderkopfes 1 bilden.

Zur Verstärkung des Zylinderkopfes 1 im Bereich des Steuerraumes 9 sind die Außenwände 4 und 5 durch Quergurte 29 miteinander verbunden, welche zwischen den Brennraumabschnitten 10 etwa in Höhe der Deckeltrennebene 3 den Steuerraum 9 quer durchsetzen. Gleichzeitig sind die Quergurte 29 über die Stützstreben 26 an die Zylinderkopfdecke 7 und den Zylinderkopfboden 2 angebunden. Durch diesen Verbund ergibt sich insbesondere eine Versteifung der zwischen den Brennraumabschnitten 10 liegenden Bereiche des Zylinderkopfbodens 2. Um dabei eine großflächige Aussteifung am Zylinderkopfboden 2 bzw. der Zylinderkopfdecke 7 zu erreichen, haben die innerhalb des Kühlwasserraumes verlaufenden Strebenabschnitte ein T-Profil und die innerhalb des Steuerraumes 9 verlaufenden Strebenabschnitte ein x-Profil mit schräg in benachbarte Brennraumabschnitte 10 des Steuerraumes 9 vorstehenden Rippenstegen 30, die mit seitlichen Vorsprüngen 31 an den Quergurten 29 verbunden sind. Die den Kühlwasserraum 8 durchsetzenden Strebenabschnitte umfassen in der Längsmittelebene 21 sich erstreckende Längsrippen 32, welche ebenfalls in die benachbarten Brennraumabschnitte 10 übergreifen und quer dazu in Kühlwasserdurchgänge 33 zwischen benachbarten Ventilkanälen symmetrisch vorstehende Rippenschenkel 34.

Der für die Anordnung von obenliegenden Nockenwellen ausgebildete Zylinderkopf 1 ist im Steuerraum mit Führungsgehäusen 35 bis 38 zur Aufnahme von Tassenstößeln zur Betätigung der Gaswechselventile ausgerüstet. Wegen der Anwendung des Zylinderkopfes bei Dieselmotoren sind die Gaswechselventile zur Gestaltung von flachen Brennraumabschnitten 10 unter einem kleinen Ventilwinkel $\alpha$ im Zylinderkopf 1 angeordnet. Der kleine Ventilwinkel $\alpha$ erfordert eine Anordnung der Führungsgehäuse 35 - 38 entfernt von den Außenwänden 4 und 5 mit kleinen seitlichen Abständen von der Längsmittelebene 21. Dabei ist der Ventilwinkel und damit der Abstand zwischen den in Querrichtung gegenüberliegenden Führungsgehäusen 36 und 38 bzw. 35 und 37 so festgelegt, daß ein Durchlaß 39 zur Aufnahme und Führung der Einspritzdüse frei bleibt. Zur Verstärkung des Zylinderkopfes 1 sind die in Längsrichtung nebeneinander angeordneten Führungsgehäuse 35 und 36 bzw. 37 und 38 brillenartig zusammengefaßt und an die Quergurte 29 und in Querrichtung sind die sich jeweils gegenüberliegenden Führungsgehäuse 35 und 37 bzw. 36 und 38 durch die seitlichen Vorsprünge 31 an den Quergurten 29 untereinander verbunden.

Gemäß Figur 4 sind zwischen den im Kühlwasserraum 8 mit der Kammer 16 zusammen gegossenen Ventilkanälen 17 bis 20 Gehäuseeinschnitte 40 bis 43 vorgesehen. Durch diese sternförmig angeordneten Gehäuseeinschnitte 40 bis 43 werden kleine Abschnitte der Kammerwandung unmittelbar von dem durch verschiedene Zulaufbohrungen 44, 45 und 46 aus dem Kühlwassermantel des Zylindergehäuses in den Kühlwasserraum 8 eintretenden Kühlwasser beaufschlagt. Um in diesen Gehäuseeinschnitten 40 bis 43 die Strömungsbewegung des Kühlwassers zu verbessern, ist an der dem Gehäuseeinschnitt 41 etwa gegenüberliegenden Stützsäule 27 ein Gehäusebutzen 47 mit einem in den Gehäuseeinschnitt 41 gerichteten Spritzwasserkanal 48 angeordnet. Der aus der Spritzöffnung 49 austretende Wasserstrahl trifft auf dem Grund des Gehäuseeinschnittes 41 auf, wodurch die Wasserumwälzung und damit die Wärmeabfuhr im Gehäusezuschnitt 41 verstärkt wird.

3

Die Gehäuseeinschnitte 40 und 42 liegen innerhalb der Kühlwasserdurchgänge 33 im Bereich der Längsmittelebene 21 etwa spiegelbildlich zueinander. Die in den Kühlwasserdurchgängen 33 zwischen den Stützsäulen 23 und den Stützstreben 26 liegenden Zulaufbohrungen 45 sind als Sacklochbohrung ausgeführt, von denen zwei Kühlwasserbohrungen 50 und 51 V-förmig in Richtung der Gehäuseeinschnitte 40 und 42 abgeführt sind und jeweils am Anfang dieser Einschnitte in den Kühlwasserraum einmünden. In die Bohrungen sind Spritzrohre 52 und 53 eingesetzt, aus denen die austretende Kühlwasserstrahlen in die Gehäuseeinschnitte eintreten.

Durch die Stützstreben 26 werden die Kühlwasserdurchgänge 33 in zwei Strömungsleitkanäle 54 und 55 unterteilt, durch welche der Kühlwasserstrom auf die Wandungen der Ventilkanäle 19, 20 und in die Gehäuseeinschnitte gelenkt wird. Um dabei ein gutes Anliegen der Kühlwasserströme an den Kanalwandungen zu erreichen, sind die Seitenflächen der Rippenschenkel 34 als Strömungsleitflächen 56 konvex gekrümmt (Figur 6), wobei entsprechend dem Verlauf der Ventilkanäle 19 und 20 deren Krümmungsradien 57 ausgehend vom Zylinderkopfboden 2 kontinuierlich größer werden. Außerdem sind die jeweils am Ein- und Ausgang der Kühlwasserdurchgänge 33 vorhandenen Stützsäulen 23 und 24 an ihren den Ventilkanälen 17 bis 20 zugewandten Wandabschnitten mit Abflachungen 58 bzw. 59 zur Kühlwasserführung versehen.

## Patentansprüche

1. Flüssigkeitsgekühlter Vierventil-Zylinderkopf für eine mehrzylindrige Brennkraftmaschine aus einem Gußstück mit einem von Außenwänden (4,5,6), einem Zylinderkopfboden (2) und einer mit Abstand über diesem angeordneten Zylinderkopfdecke (7) begrenzten Kühlwasserraum (8), der von Ventilkanälen (17-20), welche sich von Ventilöffnungen (11-14) im Zylinderkopfboden (2) bis zu den seitlichen Außenwänden (4,5) erstrecken und einer zwischen den Ventilkanälen (17-20) zylinderaxial verlaufenden rohrförmigen Kammer (16) für eine Zündkerze, eine Einspritzdüse oder eine Einspritzdüse mit einer Vorkammer durchsetzt ist, ferner mit einem über dem Kühlwasserraum (8) von der Zylinderkopfdecke (7) und den bis zu einer Deckeltrennebene (3) reichenden Außenwänden (4,5,6) umschlossenen Steuerraum (9), in dem beiderseits der Zylinderlängsmittelebene jeweils zwei brillenartig zusammengefaßte Führungsgehäuse (35-38) mit Führungsbohrungen zur Aufnahme von Tassenstößeln angeordnet sind, welche mit zwischen den Brennraumabschnitten des Zylinderkopfes verlaufenden Quergurten (29) verbunden sind, wobei die Quergurte (29) durch Stützsäulen (23) und Stützstreben (26) an der Zylinderkopfdecke (7) und am Zylinderkopfboden (2) angebunden sind und wobei innerhalb eines jeden Brennraumabschnittes (10) die Kammer (16) und die Ventilkanäle (17 bis 20) zumindest teilweise zusammengegossen sind,
**dadurch gekennzeichnet**,
daß die Quergurte (29) zwischen den seitlichen Außenwänden (4,5) durchgehend verlaufen und daß das obere Ende (60) der Kammer (16) tiefer liegt als die der Zylinderkopfdecke (7) abgewandte Oberfläche (61) der Quergurte (29).

2. Zylinderkopf nach Anspruch 1,
**dadurch gekennzeichnet**,
daß die Führungsgehäuse (35 bis 38) mit Abstand von den seitlichen Außenwänden (4, 5) zwischen den Quergurten (29) freitragend angeordnet sind.

3. Zylinderkopf nach Anspruch 1 oder 2,
**dadurch gekennzeichnet**,
daß die den Kühlwasserraum (8) durchsetzenden Abschnitte der Stützstreben (26) - im Querschnitt gesehen - ein T-Profil aufweisen, die mit ihren Rippenschenkeln (34) in Kühlwasserdurchgängen (33) zwischen den Ventilkanälen (17 bis 20) benachbarter Brennraumabschnitte (10) vorstehen und die die Kühlwasserdurchgänge (33) jeweils in zwei Strömungsleitkanäle (56) mit einer den Kühlwasserstrom in den Stegbereich (40) zwischen den Ventilen leitenden Strömungsrichtung aufteilen.

4. Zylinderkopf nach einem der Ansprüche 1 bis 3,
**dadurch gekennzeichnet**,
daß die Rippenschenkel (34) der im Kühlwasserraum (8) verlaufenden Strebenabschnitte an ihren Rippenseiten als Strömungsleitflächen (56) konvex gekrümmt sind, deren Krümmungsradien (57) ausgehend vom Zylinderkopfboden (2) kontinuierlich größer werden.

5. Zylinderkopf nach einem der Ansprüche 1 bis 4,

**dadurch gekennzeichnet,**
daß im Kühlwasserraum (8) jeweils am Ein- und Ausgang der Kühlwasserdurchgänge (33) hohle Stützsäulen (23 und 24) zur Durchführung der Zylinderkopfschrauben angeordnet sind, die an ihren den Ventilkanälen (17 bis 20) zugewandten Wandabschnitten mit Abflachungen (58 bzw. 59) zur Kühlmittelführung versehen sind.

6.  Zylinderkopf nach einem der Ansprüche 1 bis 5,
**dadurch gekennzeichnet,**
daß im Zylinderkopfboden im Bereich zwischen den Stützstreben (26) und den Stützsäulen (23, 24) jeweils eine Kühlwasserzulaufbohrung (45) vorgesehen ist, von der zwei Kühlwasserbohrungen (50, 51) V-förmig in Richtung von Gehäuseeinschnitten (40, 42) zwischen den Ventilkanälen (17, 20 bzw. 19, 19) der Ein- und Auslaßventile abgeführt sind, die jeweils am Anfang der Gehäuseeinschnitte (40, 42) in den Kühlwasserraum (8) ausmünden.

7.  Zylinderkopf nach einem der Ansprüche 1 bis 6,
**dadurch gekennzeichnet,**
daß die Ventilkanäle (19, 20) der Auslaßventile durch Gehäuseeinschnitte (41) getrennt sind, die mit Kühlwasser aus den Gehäuseeinschnitten (41) etwa gegenüberliegenden Spritzwasserkanälen (48) beaufschlagt werden.

8.  Zylinderkopf nach einem der Ansprüche 1 bis 7,
**dadurch gekennzeichnet,**
daß die den Steuerraum (9) durchsetzenden Abschnitte der Stützstreben (26) im Querschnitt etwa x-förmig ausgebildet sind, deren schräg in die Steuerraumabschnitte benachbarter Zylinder hineinragenden Rippenstege (30) mit seitlichen Vorsprüngen (31) an den Quergurten (29) verbunden sind.

9.  Zylinderkopf nach einem der Ansprüche 1 bis 8,
**dadurch gekennzeichnet,**
daß die Führungsgehäuse (35 bis 38) an den Vorsprüngen (31) angebunden sind.

10.  Zylinderkopf nach einem der Ansprüche 1 bis 9,
**dadurch gekennzeichnet,**
daß die Zylinderkopfdecke (7) in Zylinderkopfquerrichtung ausgehend von der Außenwand (5) zur Außenwand (4) hin in Richtung auf den Zylinderkopfboden 2 zu geneigt verläuft.

**Claims**

1.  Liquid-cooled four-valve cylinder head for a multi-cylinder internal-combustion engine, consisting of a casting with a cooling-water space (8) which is limited by outer walls (4,5,6), a cylinder-head bottom (2) and a cylinder-head ceiling (7) arranged at a distance above the latter and through which pass valve channels (17-20), extending from valve ports (11-14) in the cylinder-head bottom (2) as far as the lateral outer walls (4,5), and a tubular chamber (16) extending cylindrically axially between the valve channels (17-20) and intended for a spark plug, an injection nozzle or an injection nozzle with a prechamber, and furthermore with a control space (9) which is enclosed, above the cooling-water space (8), by the cylinder-head ceiling (7) and the outer walls (4,5,6) reaching as far as a cover parting plane (3) and in which are arranged respectively on both sides of the longitudinal mid-plane of the cylinder two guide housings (35-38) which are combined in the manner of spectacles and have guide bores for receiving cup tappets and which are connected to transverse booms (29) extending between the combustion-space portions of the cylinder head, the transverse booms (29) being tied to the cylinder-head ceiling (7) and to the cylinder-head bottom (2) by means of supporting columns (23) and supporting struts (26), and the chamber (16) and the valve channels (17 to 20) being at least partially cast together within each combustion-space portion (10), characterised in that the transverse booms (29) extend continuously between the lateral outer walls (4,5) and in that the upper end (60) of the chamber (16) is located lower than that surface (61) of the transverse booms (29) which faces away from the cylinder-head ceiling (7).

2.  Cylinder head according to Claim 1, characterized in that the guide housings (35 to 38) are arranged cantilevered between the transverse booms (29) at a distance from the lateral outer walls (4, 5).

3. Cylinder head according to Claim 1 or 2, characterized in that those portions of the supporting struts (26) passing through the cooling-water space (8) have a T-profile, as seen in cross-section, project with their rib legs (34) in cooling-water passages (33) between the valve channels (17 to 20) of adjacent combustion-space portions (10) and divide the cooling-water passages (33) respectively into two flow-guide channels (56) with a flow direction guiding the cooling-water stream into the web region (40) between the valves.

4. Cylinder head according to one of Claims 1 to 3, characterized in that the rib legs (34) of the strut portions extending in the cooling-water space (8) are, on their rib sides, curved convexly as flow-guide surfaces (56) of which the radii of curvature (57), starting from the cylinder-head bottom (2), become continuously larger.

5. Cylinder head according to one of Claims 1 to 4, characterized in that hollow supporting columns (23 and 24) for leading through the cylinder-head screws are arranged in the cooling-water space (8) respectively at the entrance and exit of the cooling-water passages (33) and, on their wall portions facing the valve channels (17 to 20), are equipped with flattenings (58 and 59) for coolant guidance.

6. Cylinder head according to one of Claims 1 to 5, characterized in that in the cylinder-head bottom there is, in the region between the supporting struts (26) and the supporting columns (23, 24), a respective cooling-water inflow bore (45), from which two cooling-water bores (50, 51) branch off in a V-shaped manner in the direction of housing indentations (40, 42) between the valve channels (17, 20 and 19, 19) of the inlet and outlet valves and open out into the cooling-water space (8) at the start of the respective housing indentations (40, 42).

7. Cylinder head according to one of Claims 1 to 6, characterized in that the valve channels (19, 20) of the outlet valves are separated by means of housing indentations (41) which receive cooling water from spray-water channels (48) located approximately opposite the housing indentations (41).

8. Cylinder head according to one of Claims 1 to 7, characterized in that those portions of the supporting struts (26) passing through the control space (9) are of approximately X-shaped cross-section, and their rib webs (30) protruding obliquely into the control-space portions of adjacent cylinders are connected to lateral projections (31) on the transverse booms (29).

9. Cylinder head according to one of Claims 1 to 8, characterized in that the guide housings (35 to 38) are tied to the projections (31).

10. Cylinder head according to one of Claims 1 to 9, characterized in that the cylinder-head ceiling (7) extends, in the transverse direction of the cylinder head, from the outer wall (5) towards the outer wall (4) at an inclination in the direction of the cylinder-head bottom (2).

**Revendications**

1. Culasse refroidie par eau, à quatre soupapes, pour un moteur polycylindrique à combustion interne, constituée d'une pièce coulée présentant une chambre d'eau de refroidissement (8), qui est délimitée par des parois extérieures (4, 5, 6), un fond de culasse (2) et un couvercle de culasse (7) disposé à distance au-dessus du fond et qui est traversée par des conduits de soupapes (17 à 20), s'étendant depuis des orifices de soupapes (11 à 14) dans le fond de culasse (2) jusqu'aux parois extérieures latérales (4, 5), et par une chambre tubulaire (16) s'étendant dans la direction axiale du cylindre entre les conduits de soupapes (17 à 20) et destinée à une bougie d'allumage, un injecteur ou un injecteur à préchambre de combustion, la culasse présentant également une chambre de commande (9), qui est entourée, au-dessus de la chambre d'eau de refroidissement (8), par le couvercle de culasse (7) et les parois extérieures (4, 5, 6) s'étendant jusqu'à un plan de séparation de couvercle (3), et dans laquelle sont disposés, de part et d'autre du plan médian longitudinal du cylindre, deux logements de guidage respectifs (35 à 38), réunis à la manière de lunettes et présentant des perçages de guidage destinés à recevoir des poussoirs à coupelle, lesquels logements de guidage sont assemblés à des membrures transersales (29) s'étendant entre les parties de chambre de combustion de la culasse, les membrures transversales (29) étant reliées au couvercle de culasse (7) et au fond de culasse (2) par des montants de soutiens (23) et des entretoises de soutien (26), et la chambre (16) et les conduits de soupape (17 à 20) étant au moins partiellement coulés ensemble à l'intérieur de chaque partie de chambre de combustion (10), **caractérisée** en ce que les membrures transversales (29) s'étendent sans interruption entre les parois extérieures latérales (4, 5), et en ce que l'extrémité supérieure (60) de la chambre (16) se trouve plus bas que la surface (61) des membrures transversales (29) qui est opposée au couvercle de culasse (7).

2. Culasse selon la revendication 1, caractérisée en ce que les logements de guidage (35 à 38) sont disposés en porte-à-faux entre les membrures transversales (29), à distance des parois extérieures latérales (4, 5).

3. Culasse selon la revendication 1 ou 2, caractérisée en ce que les parties des entretoises de soutien (26) traversant la chambre d'eau de refroidissement (8) présentent un profil de section en T, dont les branches formant nervures (34) font saillie dans des passages d'eau de refroidissement (33) entre les conduits de soupapes (17 à 20) de parties de chambre de combustion voisines (10), et divisent chaque passage d'eau de refroidissement (33) en deux conduits directeurs d'écoulement (56) présentant une direction d'écoulement dirigeant le flux d'eau de refroidissement dans la zone de nervure (40) entre les soupapes.

4. Culasse selon l'une des revendications 1 à 3, caractérisée en ce que les branches formant nervures (34) des parties d'entretoises s'étendant dans la chambre d'eau de refroidissement (8) présentent des faces latérales à courbure convexe, configurées en faces directrices d'écoulement (56), dont les rayons de courbure (57) augmentent en continu en partant du fond de culasse (2).

5. Culasse selon l'une des revendications 1 à 4, caractérisée en ce que des montants de soutien creux (23 et 24) sont respectivement disposés à l'entrée et à la sortie des passages d'eau de refroidissement (33) dans la chambre d'eau de refroidissement (8), et sont destinés au passage des boulons de culasse et dotés, sur leurs parties de paroi tournées vers les conduits de soupapes (17 à 20), de méplats (58 ou 59) pour le guidage du liquide de refroidissement.

6. Culasse selon l'une des revendications 1 à 5, caractérisé en ce qu'un perçage d'admission d'eau de refroidissement (45) respectif est prévu dans le fond de culasse, dans la région comprise entre les entretoises de soutien (26) et les montants de soutien (23, 24), perçage à partir duquel deux perçages d'eau de refroidissement (50, 51) sont dirigés en V vers des évidements de corps de culasse (40, 42), entre les conduits de soupapes (17, 20 ou 18, 19) des soupapes d'admission et d'échappement, qui débouchent respectivement au début des évidements de corps de culasse (40, 42) dans la chambre d'eau de refroidissement (8).

7. Culasse selon l'une des revendications 1 à 6, caractérisée en ce que les conduits de soupapes (19, 20) des soupapes d'échappement sont séparés par des évidements de corps de culasse (41), qui sont alimentés en eau de refroidissement à partir de conduits de projection d'eau (48) disposés approximativement en vis-à-vis des évidements de corps de culasse (41).

8. Culasse selon l'une des revendications 1 à 7, caractérisée en ce que les parties des entretoises de soutien (26) traversant la chambre de commande (9) sont réalisées avec une section approximativement en x, dont les branches formant nervures (30) pénétrant en oblique dans des cylindres voisins des parties de chambre de commande, sont assemblées par des épaulements latéraux (31) aux membrures transversales (29).

9. Culasse selon l'une des revendications 1 à 8, caractérisée en ce que les logements de guidage (35 à 38) sont reliés aux épaulements (31).

10. Culasse selon l'une des revendications 1 à 9, caractérisée en ce que le couvercle de culasse (7) s'étend dans la direction transversale de la culasse depuis la paroi extérieure (5) jusqu'à la paroi extérieure (4), en inclinaison dans la direction du fond de culasse (2).

# Fig.1

Fig.2

Fig.3

Fig.4

Fig.6

10

# Fig.5